(19) Europäisches Patentamt
European Patent Office
Office européen des brevets

(11) **EP 3 878 285 A1**

(12) **EUROPEAN PATENT APPLICATION**

(43) Date of publication:
**15.09.2021 Bulletin 2021/37**

(21) Application number: **20162737.9**

(22) Date of filing: **12.03.2020**

(51) Int Cl.:
***A22C 13/00*** (2006.01)   ***B32B 1/08*** (2006.01)
***C08L 29/04*** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Kuraray Co., Ltd.**
**Kurashiki-shi, Okayama 710-0801 (JP)**

(72) Inventor: **Baier, Moritz**
**65719 Hofheim (DE)**

(74) Representative: **Müller-Boré & Partner**
**Patentanwälte PartG mbB**
**Friedenheimer Brücke 21**
**80639 München (DE)**

(54) **SYNTHETIC FOOD CASINGS COMPRISING POLYVINYL ALCOHOLS AND METHOD FOR THEIR FABRICATION**

(57)    The invention is directed to synthetic food casings made from specific polyvinyl alcohol grades containing carbonyl groups, preferably in admixture with other polymers, as well as processes for using such synthetic food casings.

EP 3 878 285 A1

**Description**

The invention is directed to synthetic food casings made from specific polyvinyl alcohol grades containing carbonyl groups, preferably in admixture with other polymers, as well as processes for using such synthetic food casings.

Food casings such as sausage casings enclose the filling of packed foodstuff. Artificial casings, introduced in the early 20th century, are generally made from collagen, cellulose or plastics. Plastic casings may be made from polymers such as polyamide, polypropylene, or polyethylene. Polyamide (Nylon) plastic casings are the most commonly used in production of cooked sausages and hams such as luncheon meat and bologna. Since smoke and water vapour cannot sufficiently pass through these casings they are mainly used for non-smoked products. However, the use of polyamide casings has expanded recently with the advent of specific combinations of polyamides with other polymers which are permeable to water vapor and smoke and thus, became usable as casings for smoked foodstuff.

For example, EP 1594914 B1 discloses water vapor and smoke permeable films made of mixtures of (co-)polyamides and water soluble polymers such as polyvinyl alcohol. Such films can be used as synthetic casings for sausages subjected to smoking.

A downside of using the (co-)polyamide/polyvinyl alcohol containing food casings of the prior art is that they can become opaque from being subjected to smoke or water vapor during processing of the meat, the so-called pearl effect. However, optical appearance of the packaging has become increasingly important for the consumer, and thus, also for the manufacturer. For example, turbidity in the packaging film of dry aged meat is not accepted in the market.

WO2017039490A1 and WO2012134347A2 disclose sausage casings comprising polyvinyl alcohols modified with carbonyl groups and/or carbonyl groups conjugated to carbon-carbon double bonds. Apparently, this modification resulted in improved properties of the sausage casing like a reduced pearl effect. The carbonyl groups can be introduced by oxidation using for example oxygen or ozone under elevated temperatures. Hence, the thermo-oxidative treatment of the polyvinyl alcohol requires an additional process step, i.e. additional process time and cost. Additionally, catalysts known to accelerate the decomposition of polyvinyl alcohol are often required and the addition of such decomposition catalysts like sodium acetate or magnesium acetate can cause problems during further extrusion of the material to food packaging films. Lastly, it is well-known in the art that such thermo-oxidative treatments of polyvinyl alcohol lead to a product of yellow to brownish color. While this is acceptable for some food casings, e.g. for packing frankfurters, it is not acceptable for other foodstuff like smoked cheese or dry-aged meat.

Therefore, one object of the present invention is to improve the visual appearance, for example the transparency, turbidity and/or color of synthetic food casings. Another object of the invention is to improve the processibility of the food casings, for example improved ability to be manufactured by extrusion from polymer resins or granules; their purity profile in terms of unwanted side products comprised in the polymers used; their permeability to vapor and/or moisture; their durability when being stuffed with the foodstuff; and/or their adhesion to the foodstuff, i.e. the ability to be easily peeled off the foodstuff.

These and other objects have been solved by the present invention.

The thermo-oxidative process to modify polyvinyl alcohols after the polymerization step leads to a statistical, non-controlled distribution of carbonyl groups throughout the polymer chain. However, the current inventors have found that the objects of the present invention can be solved by using a polyvinyl alcohol bearing terminal carbonyl groups that have been selectively introduced by using chain transfer agents during the polymerization reaction to directly produce the modified polyvinyl alcohol.

Accordingly, the present invention concerns a synthetic food casing having at least one layer comprising a polyvinyl alcohol with equal to or more than 0.01 mol% and equal to or less than 2.0 mol% of a terminal carbonyl group.

The term "terminal" shall donate a group which is located at one end of the polymer chain of the polyvinyl alcohol.

The term "carbonyl group" as used in the present invention shall denote a functional group composed of a carbon atom double-bonded to an oxygen atom (C=O) such as in an aldehyde or a ketone group. Preferably, the carbonyl group is a ketone group, more preferably an alkyl ketone such as a methyl, ethyl, n-propyl, isopropyl, n-butyl, or iso-butyl; most preferably the carbonyl group is a methyl ketone.

Suitable chain transfer agents to be used during the vinyl acetate polymerization in the production process of polyvinyl alcohol include monoaldehydes such as formaldehyde, acetaldehyde, propionaldehyde, butyraldehyde and acrolein as well as dialdehydes such as glyoxal and glutaraldehyde; acetaldehyde and propionaldehyde are most preferably used.

Alternatively, carbonyl groups can also be introduced during the polyvinyl alcohol production process by using halogenated compounds having two or more halogen atoms as chain transfer agents. During the saponification process, which is part of the polyvinyl alcohol production process, the halogen atoms are substituted by hydroxyl groups, to form instable germinal diols, which are converted to carbonyl groups. Examples of halogenated compounds having two or more halogen atoms in its molecule used as chain transfer agents in the polymerization of a vinyl ester include halomethanes such as dichloromethane, trichloromethane, tetrachloromethane, dibromomethane, tribromomethane, tetrabromomethane, diiodomethane, triiodomethane, tetraiodomethane and bromochloromethane; haloethanes such as dichloroethane, trichloroethane, tetrachloroethane, pentachloroethane, hexachloroethane, dibromoethane, tribromoethane, tetrabromoethane, pentabromoethane and hexabromoethane; most preferably, trichloromethane, tetrachloromethane, tribromomethane and tetrabromomethane are used.

The synthetic food casing according to the present invention can comprise a single or multiple layers. The layers can be co-extruded, co-blown or laminated together. In case of a multilayer food casing, at least one of the layers comprises the polyvinyl alcohol with equal to or more than 0.01 mol% and equal to or less than 2.0 mol% of a terminal carbonyl group. However, more than one of the layers can contain the same or a different type of such polyvinyl alcohol.

The terminal carbonyl group may also be conjugated to carbon-carbon double bonds, which is the result of a high probability for elimination of hydroxyl groups in close proximity to carbonyl groups in the polyvinyl alcohol. Preferably, equal to or more than 25 mol%, more preferably equal to or more than 50 mol%, even more preferably equal to or more than 75 mol%, even more preferably equal to or more than 85 mol% and most preferably equal to or more than 95 mol% of the carbonyl groups are conjugated to carbon-carbon double bonds.

Besides polyvinyl alcohol with equal to or more than 0.01 mol% and equal to or less than 2.0 mol% of a carbonyl group, the at least one layer comprising the polyvinyl alcohol preferably comprises other polymers, more preferably a further thermoplastic resin selected from the group consisting of thermoplastic starch, thermoplastic polyvinylpyrrolidone, polyamide, block copolymers of polyamide and polyether, block copolymers of polyurethane and polyether, block copolymers of polyester and polyether, and blends thereof. Most preferably, the at least one layer further comprises polyamide, specifically a Nylon® polymer chosen from polyamide 6, polyamide 66, polyamide 46, polyamide 6/12, copolyamide 6/66, copolyamide 46/6 and mixtures thereof.

Alternatively or in addition, other layers than the at least one layer comprising the polyvinyl alcohol according to the present invention can comprise a further thermoplastic resin selected from the group consisting of thermoplastic starch, thermoplastic polyvinylpyrrolidone, polyamide, block copolymers of polyamide and polyether, block copolymers of polyurethane and polyether, block copolymers of polyester and polyether, and blends thereof, preferably polyamide.

Preferably the polyvinyl alcohol content of the at least one layer comprising the polyvinyl alcohol is 5 to 50 wt%, more preferably 10 to 40 wt% and even more preferably 15 to 30 wt%.

In order to show the desired effects, a polyvinyl alcohol is used with equal to or more than 0.01 mol%, preferably 0.025 mol%, and more preferably 0.05 mol% of a carbonyl group. Furthermore, a polyvinyl alcohol with equal to or less than 2.0 mol%, preferably 1.0 mol%, more preferably 0.75 mol%, and most preferably 0.5 mol% of a carbonyl group is used. The preferred range is 0.05 to 0.5 mol%, more preferably 0.075 to 0.25 mol%.

The polyvinyl alcohol comprises vinyl alcohol units, vinyl acetate units and functionalized vinyl alcohol units and may optionally comprise additional units which were incorporated during polymerization of the vinyl acetate and/or by reactions following the polymerization. Such other units can be present in an amount of 0.1 to 50 mol%, preferably 0.1 to 25 mol%, more preferably 0.1 to 15 mol% based on all monomer units of the partially hydrolyzed polyvinyl acetate. Such other units could stem from other compounds bearing a vinyl unit, e.g. from $\alpha$-olefins, such as ethylene and propylene; (meth)acrylic acid and salts thereof; (meth)acrylic acid esters, such as methyl (meth)acrylate, ethyl (meth)acrylate, n-propyl (meth)acrylate, i-propyl (meth)acrylate, n-butyl (meth)acrylate, i-butyl (meth)acrylate, t-butyl (meth)acrylate, 2-ethylhexyl (meth)acrylate, dodecyl (meth)acrylate, and octadecyl (meth)acrylate; (meth)acrylamide; (meth)acrylamide derivatives, such as N-methyl (meth)acrylamide, N-ethyl (meth)acrylamide, N,N-dimethyl (meth)acrylamide, diacetone (meth)acrylamide, (meth)acrylamide propane sulfonic acid and salts thereof, (meth)acrylamidopropyl dimethylamine and salts thereof or quaternary salts, and N-methylol (meth)acrylamide and derivatives thereof; vinyl ethers, such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, and stearyl vinyl ether; nitriles, such as acrylonitrile and methacrylonitrile; vinyl halides, such as vinyl chloride and vinyl fluoride; vinylidene halides, such as vinylidene chloride and vinylidene fluoride; allyl compounds, such as allyl acetate, allyl alcohol, allyl, allyl chloride and 3,4-diacetoxy-1-butene, 3,4-dihydroxy-1-butene, 1,4-diacetoxy-1-butene and 1,4-dihydroxy-1-butene; unsaturated dicarboxylic acids, such as maleic acid, itaconic acid, and fumaric acid, and salts thereof or esters thereof; vinylsilyl compounds, such as vinyltrimethoxysilane; isopropenyl acetates; and the like. Preferred additional units are: a vinyl unit, e.g. from $\alpha$-olefins, such as ethylene; (meth)acrylic acid and salts thereof; (meth)acrylic acid esters. The polymer structure of the vinyl acetate copolymer can be syndiotactic, isotactic, atactic, linear, cyclic, branched, grafted or dendritic or combinations thereof. It is possible to use statistic copolymers as well as alternating or block copolymers. The polymers are insoluble or soluble in organic solvents or aqueous solutions or combinations thereof. Preferably the polymers are either soluble, dispersible or emulsifiable in water or aqueous solutions.

Preferably, the repeating unit is ethylene. The ethylene content is preferably from 0.25 mol% to 60 mol%. More preferably, the ethylene content is 0.5 mol%, 2.5 mol%, 5 mol%, 10 mol%, 15 mol% or more, and most preferably 20 mol% or more. Furthermore, the ethylene content is preferably 55 mol% or less, more preferably 50 mol% or less, most preferably 10 mol% or less. The ethylene content can be measured by nuclear magnetic resonance (NMR) by methods known in the art.

The polyvinyl alcohol according to the present invention preferably has a degree of hydrolysis (DH) from 40 to 99.9 mol%, preferably 60 to 95 mol%, more preferably from 65 to 90 mol%.

Preferably, the polyvinyl alcohol according to the present invention has a viscosity as a 4 wt% solution in water at 20 °C measured in accordance with DIN 53015 from 3.0 to 30.0 mPa•s, more preferably from 4.0 to 12.0 mPa•s.

Also preferably, polyvinyl alcohol according to the present invention has a combined residual content of alkaline and alkaline earth salts, preferably of sodium and/or magnesium acetate, more preferably of sodium acetate, from 0.01 to 3.0 wt%, more preferably from 0.01 to 2.5 wt%, most preferably from 0.01 to 1.0 wt%.

Also preferably, the polyvinyl alcohol according to the present invention has a yellowness index of <10, more preferably <5 measured using a 1 wt% aqueous solution according to ASTM E313 with illuminant C and the CIE 1931 standard colorimetric observer (2°). For comparison, polyvinyl alcohol, which was subjected to a thermo-oxidative process or processed with significant amounts of decomposition catalysts typically has a yellowness index of >10 or even >20.

Also preferably, the synthetic food casing according to the invention has a permeability to water vapor and/or smoke from 300 $g/m^2 \cdot day$ to 2000 $g/m2 \cdot day$ at 50 $\mu$m film thickness when measured according to DIN53122-1 at 40 °C and 95% RH. More preferably, the permeability is from 350 to 1500 $g/m^2 \cdot day$, most preferably from 400 to 1300 $g/m^2 \cdot day$.

Preferably, the polyvinyl alcohol according to the invention is used with additives, such as plasticizers, lubricants, anti-blocking agents, pigments and inorganic fillers. It is especially preferred that the polyvinyl alcohol further comprises a plasticizer selected from the group consisting of glycerin, 1,2-propanediol, trimethylolpropane, di trimethylolpropane, pentaerythritol, di-pentaerythritol, sorbitol, xylitol, inositol, mannitol, maltitol, triethanolamine, polyethylene glycol with a molecular weight from 200 to 10000 Da, and mixtures thereof, preferably further comprising glycerin. The amount of plasticizer, if used, or the total amount of different plasticizers, if used, is from 1 to 20 wt%, preferably 5 to 15 wt% based on the total weight of the polyvinyl alcohol used.

Synthetic food casings according to the invention, specifically those also containing polyamide, may be oriented and non-oriented. Synthetic food casings comprising oriented polyamide are usually shrinkable casings, i.e. they shrink during the cooking process. Non-oriented polyamide casings remain the same diameter during the cooking process and thereby allow for expansion of the meat during cooking. Preferably, the synthetic food casing according to the invention is a shrink film. Especially for packaging of meat subject to dry aging or curing a shrink film is preferred to guarantee tight fit of the packaging film around the meat.

The same type of moisture permeable films can be also used for packaging of fresh meat, which is subject to dry aging. Dry aging of meat is generally considered to result in better tasting meat compared to wet aging, for which the meat is sealed in impermeable films prior to aging. However, for conventional dry aging the meat is unpackaged, which increases the risk of spoiled meat or increased amount of trimming of the meat surface. Therefore, packaging of the meat in moisture permeable films combines the benefits of wet aging and dry aging. The same applies to curing of meat, e.g. ham.

Accordingly, another aspect of the present invention is a process to dry, cure or smoke foodstuff using a synthetic food casing according to the embodiments described above. Preferably, the foodstuff processed is meat or cheese.

Yet another aspect of the present invention is the use of the synthetic food casing according to the embodiments as described above for smoking, curing or drying meat.

Yet another aspect of the present invention is a foodstuff obtained by the process according to the present invention.

Yet another aspect of the present invention is a mixture of a polyvinyl alcohol containing equal to or more than 0.01 mol% and equal to or less than 2 mol% terminal carbonyl groups with a polyamide. Preferably, the terminal carbonyl group is a terminal methyl ketone. Also preferably, the polyamide is a polyamide 6, polyamide 66, polyamide 46, polyamide 6/12, copolyamide 6/66, copolyamide 46/6 or mixtures thereof. Preferably the mixture contains 5-50 wt% polyvinyl alcohol and 50-95 wt% polyamide, more preferably 10-40 wt% polyvinyl alcohol and 60-90 wt% polyamide.

**Examples**

Measurement of degree of hydrolysis

Degree of hydrolysis indicates percentage of vinyl acetate unit saponified to vinyl alcohol unit and it is calculated using the following equation. EV means Ester Value which is the number of mg KOH needed to neutralize the acid released from the ester by saponification in 1 g of substance and it is measured according to EN ISO 3681.

$$\text{Degree of hydrolysis} = 100 \times (100 - 0.1535 \times EV) / (100 - 0.0749 \times EV)$$

Viscosity:

For the measurements, 4 wt% solutions in deionized water were prepared. The measurements were performed at 20 °C in a falling ball viscometer according to DIN 53 015.

Measurement of degree of polymerization

The degree of polymerization is measured according to JIS K6727. Specifically, it may be calculated by the equation below from the limiting viscosity $[\eta]$ (unit: L/g) measured in water at 30 °C after re-saponification and purification of the PVOH. Degree of polymerization = $([\eta] \times 10000/8.29)^{(1/0.62)}$

Measurement NaOAc content

PVOH is dissolved in distilled water to provide solutions having concentration of 4, 8 and 20 wt% and adjusted to a temperature of 20-25 °C. The conductivity cell (for example type "cond 315i", commercialized by WTW) is likewise adjusted to a temperature of 20-25 °C and washed with distilled water. The cell is immersed into the solution and after 5-10 seconds, the conductivity of the solution is read.

The sodium acetate content is calculated as follows:

NaOAc content on % = conductivity (4% solution) x 0.002875
NaOAc content on % = conductivity (8% solution) x 0.001687
NaOAc content on % = conductivity (20% solution) x 0.001063.

Measurement of yellowness index

The yellowness index of the polyvinyl alcohol was determined from a 1 wt% aqueous solution in 33 mm quartz cell with a spectrophotometer in transmission mode according to ASTM E313 with illuminant C and the CIE 1931 standard colorimetric observer (2°).

Measurement of terminal carbonyl group content exemplified for terminal methyl ketone groups

The terminal methyl ketone group content was determined by $^1$H NMR spectroscopy (600 MHz) of the polymer dissolved in DMSO-d6 at 80 °C. The spectrum was referenced to the solvent signal. The methyl ketone content was calculated from the integral of the methyl group protons adjacent to the ketone group with reference to the polymer backbone methylene protons to obtain the methyl ketone group content with respect to the vinyl alcohol and vinyl acetate repeating units.

Methyl ketone $CH_3CO$ = integral(2.218-2.197 ppm) + integral(2.197-2.175 ppm) + integral(2.120-2.080 ppm)
Acetate $CH_3COO$ = integral(2.010-1.910 ppm)
Sodium acetate $CH_3COONa$ = integral(1.660-1.650 ppm)
Backbone $CH_2$ = (integral(2.35 ppm-0.00 ppm) - $CH_3CO$ - $CH_3COO$ - $CH_3COONa$)/2
Methyl ketone end-group content in mol% = $CH_3CO$ / 3 / $CH_2$ * 100

For other terminal carbonyl groups, the skilled person is aware of the suitable proton signal to be used for the respective measurement. For example in case of a terminal aldehyde, the proton signal of the aldehyde C(O)H proton would be used.

Measurement of water vapor transmission rate (WVTR)

WVTR was measured according to DIN 53122-1 in a climate controlled cabinet at 40 °C and 95% relative humidity. The film samples were sealed to the measurement cup containing silica gel as a desiccant with paraffin wax. The area of the film measured was 28.27 cm$^2$. The film samples were conditioned at 40 °C and 95% relative humidity before the measurement was started. Before the measurement the film thickness of each sample was measured at several points and the WVTR results at the end were normalized to a film thickness of 50 $\mu$m.

Investigation of film turbidity before and after exposure to hot water

Film samples were placed in deionized water at 80 °C for 2 h. After drying the film samples at ambient conditions the turbidity was determined and compared to untreated film samples. The turbidity is classified by the following categories in order of increasing turbidity: 1 (very little turbidity, i.e. comparable to pure polyamide film), 2 (minor degree of turbidity can be recognized, but the film is still relatively clear), 3 (slightly turbid), 4 (significant turbidity), 5 (film is white and transparency is significantly deteriorated).

Preparation of PVOH compositions

PVOH compositions were prepared by feeding all components to a Leistritz ZSE 27 HP twin screw extruder with a screw diameter of 27 mm and a L/D ratio of 44 as described in WO 03/020823 A1. The length of a zone was 4D, thus the extruder has 11 zones. Feeding of the raw materials was performed in zone 1 and 2. Vacuum was applied in zone 10 to remove volatiles. The extruder screw profile was configured with conveying, kneading and mixing elements in a way to homogeneously melt and mix all components with little shear according to common knowledge known to those skilled to the art. Solids were added to the extruder in zone 1. Liquids were added in zone 2 with a feeding pump. Extrusion was carried out at a screw speed of 200 rpm and a throughput of 20 kg/h. The temperature profile of the extruder from the feeding section to the die was 50/150/175/200/3x210/3x205/200 °C. Strands with a diameter of 3 mm were extruded, which were cooled by air cooling. After cooling the strands were cut to pellets by a strand cutter. The pellets were packaged in moisture tight aluminum bags to protect them from humidity until further use.

Blown film extrusion

Blown films were prepared on a Dr. Collin blown film line consisting of a E30P extruder (30 mm screw diameter, compression ratio 3.34, L/D 25), a 50 mm spiral mandrel distributor die and a BL180/400 blown film unit. For extrusion of PVOH/polyamide blends the PVOH pellets were mixed with polyamide 6/66 pellets (UBE Nylon 5033B, which was dried at 120 °C for 12h before use). The temperature profile of the extruder from the feeding section to the die was 50/80/215/225/5x215/205/195 °C. Melt temperature was around 215 °C and extrusion was carried out at a screw speed of 60 rpm, a haul-off speed of 4.5 m/min and a blow up ratio of 5.

Example 1

A 6-liter reaction vessel equipped with a stirrer, nitrogen inlet, additive inlet and initiator inlet is charged with 1200 g of vinyl acetate, and 90 g of acetaldehyde. After raising the temperature to 60 °C, the system was purged with nitrogen by nitrogen bubbling for 30 minutes. The temperature in the reaction vessel was adjusted to 60 °C, and 1.5 g of 2,2'-azobis(isobutyronitrile) was added to initiate polymerization. The polymerization temperature was maintained at 60°C during the polymerization. After 4 hours, when the conversion reached 60%, the polymerization was stopped by cooling to room temperature. Next, unreacted vinyl acetate was removed under reduced pressure and methanol was added to obtain a methanol solution of polyvinyl acetate (hereinafter sometimes abbreviated as PVAc). The concentration of the PVAc methanol solution was adjusted to 30 wt%, and a methanol NaOH solution (10 wt% concentration) was added so that the alkali molar ratio (number of moles of NaOH / number of moles of vinyl ester units in PVAc) was 0.0088. The reaction mixture was heated to 40 °C and the saponification was carried out for 30 minutes. Afterwards the obtained vinyl alcohol copolymer was washed with methanol and dried. By the above operation, a vinyl alcohol copolymer having a polymerization degree of 750, a saponification degree of 72 mol%, a sodium acetate content of 0.93 wt%, a yellowness index of 3 and a methylketone end-group content of 0.1 mol% was obtained.

The resulting polymer was pelletized by processing it with a twin screw extruder following the general procedure as described above.

Nylon 6/66 pellets were mixed with 25 wt% of the resulting PVOH pellets and extruded to a blown film with a thickness of 30 $\mu$m as described above. The film has a WVTR (standardized to a film of 50 $\mu$m thickness) of 450 g/m$^2$·day and turbidity was rated as 1. After exposure to hot water as described above, the turbidity of the film was rated 2.

Example 2

PVOH was prepared as described in Example 1 and compounded with 10% of glycerin in a twin screw extruder following the general procedure described above. Nylon 6/66 pellets were mixed with 25 wt% of the resulting PVOH pellets and extruded to a blown film with a thickness of 30 $\mu$m. The film has a WVTR (50 $\mu$m film thickness) of 670 g/m$^2$·day and turbidity was rated as 1. After exposure to hot water film turbidity is rated 3. Thus, the resulting film exhibits similar WVTR as a film made with a similar PVOH grade without ketone end groups and a much better transparency after exposure to hot water.

Comparative Example 1

Pure Nylon 6/66 was extruded to a blown film with a thickness of 30-40 $\mu$m. The film has a WVTR(50 $\mu$m film thickness) of 270 g/m$^2$·day and turbidity was rated as 1. After exposure to hot water the film turbidity is still rated 1.

Comparative Example 2

Nylon 6/66 pellets were mixed with 25 wt% of the commercially available thermoplastic PVOH MOWIFLEX™ C30 (available from Kuraray Europe GmbH) and extruded to a blown film with a thickness of 30 $\mu$m. The film has a WVTR(50 $\mu$m film thickness) of 630 g/m$^2$·day and turbidity was rated as 1. After exposure to hot water film turbidity is rated 5.

Comparative Example 3

A commercially available PVOH grade (KURARAY POVAL 5-74), which does not contain ketone end-groups, with a degree of polymerization of 600, a degree of hydrolysis of 73.6% and a sodium acetate content of 0.75 wt% was pelletized by processing it with a twin screw extruder following the general procedure as described above.
Nylon 6/66 pellets were mixed with 25 wt% of the resulting PVOH pellets and extruded to a blown film with a thickness of 30 $\mu$m. The film has a WVTR (50 $\mu$m film thickness) of 460 g/m$^2$·day and turbidity was rated as 1. After exposure to hot water film turbidity is rated 5.

Comparative Example 4

A commercially available PVOH grade (KURARAY POVAL 5-74), which does not contain ketone end-groups, with a degree of polymerization of 600, a degree of hydrolysis of 73.6% and a sodium acetate content of 0.75 wt% was compounded with 10% glycerin by processing it with a twin screw extruder following the general procedure as described above.
Nylon 6/66 pellets were mixed with 25 wt% of the resulting PVOH pellets and extruded to a blown film with a thickness of 30 $\mu$m. The film has a WVTR (50 $\mu$m film thickness) of 590 g/m$^2$·day and turbidity was rated as 1. After exposure to hot water film turbidity is rated 4.

Results

Table 1 shows the turbidity ratings of the examples according to the invention and the comparative results:

| Example | Turbidity rating before hot water treatment | Turbidity rating after hot water treatment | WVTR (g/m$^2$·day) |
|---|---|---|---|
| Example 1 | 1 | 2 | 450 |
| Example 2 | 1 | 3 | 670 |
| Comparative Example 1 | 1 | 1 | 270 |
| Comparative Example 2 | 1 | 5 | 630 |
| Comparative Example 3 | 1 | 5 | 460 |
| Comparative Example 4 | 1 | 4 | 590 |

Conclusion from the experiments

The experiments show that the films according to the invention show similar WVTR (water vapour transition rate) as the films made with PVOH grades without carbonyl groups. However, the inventive films have substantially less turbidity after exposure to hot water as compared to the films made with conventional PVOH groups (comparative examples 2 to 4). Comparative example 1, which is a synthetic food casing made from polyamide without the addition of polyvinyl alcohol, displays good turbidity. However, as expected, the WVTR is not sufficient for many applications in the food industry.

**Claims**

1. A synthetic food casing having at least one layer comprising a polyvinyl alcohol with equal to or more than 0.01 mol% and equal to or less than 2.0 mol% of a terminal carbonyl group.

2. The synthetic food casing according to claim 1 wherein the terminal carbonyl group is a terminal ketone group.

3. The synthetic food casing according to claim 1 or 2 wherein the terminal carbonyl group is a terminal methyl ketone group.

4. The synthetic food casing according to any one of claims 1 to 3 wherein the terminal carbonyl group is introduced into the polyvinyl alcohol by using a chain transfer agent during the polymerization reaction.

5. The synthetic food casing according to any one of claims 1 to 4 wherein the at least one layer further comprises a further thermoplastic resin selected from the group consisting of thermoplastic starch, thermoplastic polyvinylpyrrolidone, polyamide, block copolymers of polyamide and polyether, block copolymers of polyurethane and polyether, block copolymers of polyester and polyether, and blends thereof, preferably the at least one layer further comprises polyamide.

6. The synthetic food casing according to any one of claims 1 to 5 wherein the synthetic food casing has a permeability to water vapor and smoke from 300 g/m$^2$·day to 1500 g/m$^2$·day at 50 $\mu$m film thickness when measured according to DIN53122-1 at 40 °C and 95% RH.

7. The synthetic food casing according to any one of claims 1 to 6 wherein the polyvinyl alcohol further comprises a plasticizer selected from the group consisting of glycerin, 1,2-propanediol, trimethylolpropane, di-trimethylolpropane, pentaerythritol, di-pentaerythritol, sorbitol, xylitol, inositol, mannitol, maltitol, triethanolamine, polyethylene glycol with a molecular weight from 200 to 10000 Da and mixtures thereof, preferably further comprising glycerin.

8. The synthetic food casing according to any one of claims 1 to 7 wherein the polyvinyl alcohol comprises from 0.001 to 2.0 wt% sodium acetate.

9. A process to dry, cure or smoke foodstuff using a synthetic food casing according to any one of claims 1 to 8.

10. The process according to claim 9 wherein the foodstuff is meat or cheese.

11. Use of the synthetic food casing according to any one of claims 1 to 8 for smoking, curing or drying meat.

12. Foodstuff obtained by the process according to claim 9 or 10.

13. A mixture comprising a polyvinyl alcohol with equal to or more than 0.01 mol% and equal to or less than 2.0 mol% of a terminal carbonyl group and a polyamide.

14. The mixture according to claim 13 wherein the carbonyl group is a terminal methyl ketone group.

15. The mixture according to claim 13 or 14 wherein the polyamide is selected from a (co)polyamide selected from the group comprising polyamide 6, polyamide 66, polyamide 46, polyamide 6/12, copolyamide 6/66, copolyamide 46/6 and mixtures thereof.

Europäisches
Patentamt

European
Patent Office

Office européen
des brevets

## EUROPEAN SEARCH REPORT

Application Number

EP 20 16 2737

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DE 39 30 834 A1 (TEXDA TEXTIL DARM GMBH [DE]) 28 March 1991 (1991-03-28) * column 1, line 3 - column 4, line 45 * ----- | 1-15 | INV. A22C13/00 B32B1/08 C08L29/04 |
| Y | JP S51 84999 A (SHINETSU CHEMICAL CO) 24 July 1976 (1976-07-24) * the whole document * ----- | 1-15 | |
| Y | EP 2 764 040 A1 (VISKASE COMPANIES INC [US]) 13 August 2014 (2014-08-13) * paragraphs [0001] - [0093]; figures 1-2; tables 1-7 * ----- | 1,9-13, 15 | |
| Y | US 6 472 470 B1 (FUJIWARA NAOKI [JP] ET AL) 29 October 2002 (2002-10-29) * abstract * * column 1, line 6 - column 41, line 9; claims 1-16; tables 1-22 * ----- | 1,9-13, 15 | |

TECHNICAL FIELDS
SEARCHED      (IPC)

A22C
B32B
C09J
C08L

The present search report has been drawn up for all claims

| Place of search | Date of completion of the search | Examiner |
|---|---|---|
| The Hague | 8 September 2020 | Rojo Galindo, Ángel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.....................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 16 2737

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2020

| Patent document cited in search report | | | Publication date | Patent family member(s) | | | Publication date |
|---|---|---|---|---|---|---|---|
| DE | 3930834 | A1 | 28-03-1991 | NONE | | | |
| JP | S5184999 | A | 24-07-1976 | JP | S589196 | B2 | 19-02-1983 |
| | | | | JP | S5184999 | A | 24-07-1976 |
| EP | 2764040 | A1 | 13-08-2014 | BR | 112014013420 | A2 | 13-06-2017 |
| | | | | EP | 2764040 | A1 | 13-08-2014 |
| | | | | ES | 2639546 | T3 | 27-10-2017 |
| | | | | MX | 355994 | B | 07-05-2018 |
| | | | | PL | 2764040 | T3 | 29-12-2017 |
| | | | | US | 2014322394 | A1 | 30-10-2014 |
| | | | | WO | 2013090442 | A1 | 20-06-2013 |
| US | 6472470 | B1 | 29-10-2002 | AT | 296841 | T | 15-06-2005 |
| | | | | AU | 729215 | B2 | 25-01-2001 |
| | | | | CA | 2291217 | A1 | 09-06-2000 |
| | | | | CN | 1261605 | A | 02-08-2000 |
| | | | | DE | 69925562 | T2 | 04-05-2006 |
| | | | | DK | 1008605 | T3 | 29-08-2005 |
| | | | | EP | 1008605 | A1 | 14-06-2000 |
| | | | | ES | 2239833 | T3 | 01-10-2005 |
| | | | | KR | 20000048036 | A | 25-07-2000 |
| | | | | NO | 323321 | B1 | 19-03-2007 |
| | | | | PT | 1008605 | E | 31-08-2005 |
| | | | | TW | 434272 | B | 16-05-2001 |
| | | | | US | 6472470 | B1 | 29-10-2002 |

EPO FORM P0459

For more details about this annex : see Official Journal of the European Patent Office, No. 12/82

**REFERENCES CITED IN THE DESCRIPTION**

**Patent documents cited in the description**

- EP 1594914 B1
- WO 2017039490 A1
- WO 2012134347 A2
- WO 03020823 A1